# FASCICULE DE BREVET EUROPEEN

(11) **EP 0 425 363 B1**
(45) Date de publication et mention de la délivrance du brevet: **20.07.1994**
(21) Numéro de dépôt: 90402973.3
(22) Date de dépôt: 23.10.1990
(51) Int. Cl.: F24H 1/10, F24H 8/00, F23L 15/04

(54) **Pompe à vapeur à échangeur air-produits de combustion à contre-courant sans fluide intermédiaire**
Dampfpumpe mit Gegenstromaustauscher für Luft und Verbrennungsprodukte ohne Zwischenfluid
Vapor pump with countercurrent exchanger for air and combustion products without intermediate fluid

(30) Priorité: 24.10.1989 FR 8913945
(43) Date de publication de la demande: 02.05.1991
(73) Titulaire: GAZ DE FRANCE (SERVICE NATIONAL), F-75017 Paris (FR)
(72) Inventeur: Guillet, Rémi P., F-93380 Pierrefitte (FR); Baeckeroot, Georges I., F-77910 Germigny L'Evêque (FR)
(74) Mandataire: Thévenet, Jean-Bruno

(56) Documents cités:
- EP-A- 0 230 193
- CH-A- 148 723
- GB-A- 2 112 517

## Description

La présente invention a pour objet une pompe à vapeur d'eau constituée par un échangeur massique et thermique assurant des transferts d'énergie d'une part entre des produits de combustion issus d'un process thermique et ayant traversé un premier condenseur et d'autre part l'air comburant entrant.

On connait déjà plusieurs types d'échangeurs massiques et thermiques, encore dénommés pompes à vapeur, qui permettent de recycler avec l'air comburant nécessaire à un process thermique une part plus ou moins grande de l'énergie sensible et latente contenue dans les produits de combustion sortant des générateurs à condensation.

On a ainsi proposé par le document FR-A-2 446 460 une installation de chauffage à condensation comprenant un échangeur-récupérateur de chaleur pour coupler thermiquement l'air comburant nécessaire au générateur de chaleur avec des produits de combustion issus du générateur de chaleur, des moyens d'humidification étant prévus pour prélever au moins une partie des condensats issus des produits de combustion et pour mettre ces condensats en contact avec l'air comburant. Cet échangeur connu comprend une pluralité de compartiments juxtaposés séparés par des cloisons verticales et communiquant à leurs extrémités avec des chambres inférieure et supérieure, une première série de compartiments alternés étant en communication à une première extrémité avec une première chambre inférieure et à une deuxième extrémité avec une première chambre supérieure tandis que les compartiments immédiatement adjacents aux compartiments alternés de la première série communiquent avec une deuxième chambre supérieure à leur extrémité voisine de ladite première extrémité et avec une deuxième chambre inférieure à leur extrémité voisine de ladite deuxième extrémité. Les compartiments alternés communiquant avec les premières chambres supérieure et inférieure sont parcourus par de l'air à réchauffer tandis que les compartiments alternés communiquant avec les deuxièmes chambres supérieure et inférieure sont parcourus par des produits de combustion. Une première série de rampes d'alimentation en condensats est installée à l'extrémité supérieure des compartiments de la première série tandis qu'une deuxième série de rampes d'alimentation en condensats est installée à l'extrémité supérieure des compartiments de la seconde série. Un tel type d'échangeur massique et thermique s'avère très encombrant, délicat à réaliser et coûteux si l'on souhaite obtenir une efficacité importante. De plus, de par son principe, il assure des échanges à flux croisés et conduit la plupart du temps à une humidification excessive des fumées ou à un phénomène de ruissellement du condensat de part et d'autre des parois de l'échangeur qui provoque souvent une baisse du rendement de l'échange thermique. D'une façon générale, le contrôle des condensats est difficile à effectuer et par ailleurs les installations auxiliaires de pompage ou de ventilation impliquent une consommation d'énergie souvent non négligeable.

On a par ailleurs proposé dans le document FR-A-2 508 616 un dispositif de traitement de gaz relativement chauds et humides, tels que des fumées, et de gaz relativement secs et frais, tels que des gaz comburants d'un foyer, pour récupérer la chaleur et éventuellement les condensats des fumées et réchauffer et humidifier l'air comburant. Ce dispositif de traitement connu met cependant en oeuvre deux enceintes distinctes parcourues l'une par les gaz chauds et humides et l'autre par les gaz relativement secs et frais, chacune des enceintes comportant à sa partie supérieure des moyens de pulvérisation de liquides constitués par les condensats récupérés lors du traitement. Là encore, un tel dispositif de traitement est encombrant du fait de la présence de deux enceintes et est d'une efficacité qui, bien qu'acceptable, reste limitée. Par ailleurs une telle installation implique la mise en oeuvre de moyens d'équilibrage des débits dans les différentes enceintes et des moyens de transfert de fluides (pompes de circulation, ventilateurs) qui peuvent entraîner une consommation d'énergie importante et liée notamment aux pertes de charge d'écoulement des gaz dans les deux enceintes remplies d'un garnissage métallique.

On connaît encore par le document CH-A-148723 une installation de chaudière dans laquelle de l'air comburant sec est préchauffé et de l'eau également préchauffée est injectée dans cet air comburant de manière à obtenir de l'air comburant humidifié dont le niveau de préchauffage est limité.

Une telle disposition est mise en oeuvre pour empêcher la formation de scories. La vapeur injectée dans l'air comburant est produite à partir d'eau provenant de l'extérieur en prélevant de l'énergie sensible sur les fumées.

Les performances énergétiques de la combustion ne sont toutefois pas améliorées puisque l'énergie recyclée se traduit in fine par une production de vapeur d'eau qui n'est pas ensuite condensée et ne peut donc faire l'objet d'une récupération de chaleur latente.

La présente invention vise à remédier aux inconvénients précités et à permettre d'obtenir une efficacité accrue de recyclage de l'enthalpie des produits de combustion avec un échangeur thermique et massique dont la taille ainsi que les coûts de fabrication et d'exploitation sont réduits.

L'invention a encore pour but de réaliser un échangeur thermique et massique, encore dénommé pompe à vapeur, qui puisse être utilisé en combinaison avec des processus thermiques divers associés ou non à des condenseurs sans qu'il soit nécessaire de procéder à des adaptations délicates, notamment dans le cas de grosses installations, telles que des chaufferies mettant en oeuvre des chaudières à condensation.

Ces buts sont atteints grâce à une pompe à vapeur d'eau constituée par un échangeur massique et thermique assurant des transferts d'énergie entre d'une part des produits de combustion issus d'un process thermique et ayant traversé un premier condenseur et d'autre part l'air comburant entrant, comprenant une enceinte extérieure, un ensemble de compartiments formant échangeur disposés à l'intérieur de l'enceinte dans le sens longitudinal de celle-ci débouchant à leurs extrémités au niveau d'un premier plan radial et d'un second plan radial, de manière de définir entre lesdits plans radiaux un premier circuit de circulation de fluide gazeux à l'intérieur des compartiments et un second circuit distinct de circulation de fluide gazeux à l'intérieur de l'enceinte mais à l'extérieur des compartiments, un orifice d'introduction d'un premier fluide gazeux à l'intérieur de l'enceinte dans ledit second circuit, un orifice d'évacuation hors de l'enceinte dudit premier fluide gazeux circulant dans ledit second circuit, un orifice d'introduction d'un second fluide gazeux à l'intérieur de l'enceinte dans ledit premier circuit et un orifice d'évacuation hors de l'enceinte dudit second fluide gazeux circulant à contre-courant dans ledit premier circuit, l'un des premier et second fluides gazeux étant constitué par lesdits produits de combustion chauds ayant traversé ledit premier condenseur mais encore chargés d'humidité tandis que l'autre fluide gazeux est constitué par de l'air comburant neuf, des moyens d'humidification de l'air introduit dans l'enceinte, comprenant un ensemble de gicleurs disposés de manière à pulvériser en volume de l'eau en fin brouillard, de telle manière que seules les faces des parois des compartiments en contact avec l'air soient humidifiées, de telle sorte que les compartiments définissent à l'intérieur de l'enceinte un échangeur air-produits de combustion à contre-courant sans fluide intermédiaire dans lequel les transferts d'énergie des produits de combustion vers l'air neuf, des produits de combustion vers l'eau pulvérisée et des condensats des produits de combustion vers l'eau pulvérisée sont effectués à travers la paroi des compartiments tandis que le transfert de l'énergie de l'eau pulvérisée vers l'air est réalisé par contact direct, et les moyens d'humidification d'air étant alimentés en eau à partir d'un réservoir caractérisé en ce que les compartiments sont constitués par des tubes débouchant à leurs extrémités au niveau desdits premier et second plans radiaux dans lesquels sont disposés des moyens assurant le positionnement et le support des tubes par rapport à l'enceinte ainsi que l'obturation des espaces libres de la section de l'enceinte situés à l'extérieur des tubes en ce que les gicleurs sont disposés de manière à pulvériser en volume de l'eau au moins dans toute la section d'entrée du circuit de circulation de l'air et dans toute la section de sortie du circuit de circulation d'air, et en ce que les moyens d'humidification d'air sont alimentés en eau à partir d'un réservoir contenant les condensats issus dudit premier condenseur.

Les tubes présentent des parois lisses et sont avantageusement constitués par des tubes à grande surface d'échange, tels que des tubes à section en forme de "haricot" présentant deux portions de plus grand diamètre mises en communication à l'aide d'une portion étroite de liaison.

Compte tenu de l'efficacité des échanges, les tubes de l'échangeur air-produits de combustion peuvent être réalisés en une matière synthétique, telle que le polyfluorure de vinylidène (PVDF) ou le polychlorure de vinyle (PVC) mais peuvent également être métalliques, en acier inoxydable par exemple.

Selon une caractéristique particulière de l'invention, chaque gicleur formant un élément des moyens d'humidification produit un jet sous la forme d'un cône plein, et comprend une multiplicité d'orifices de sortie assurant la pulvérisation d'eau selon un fin brouillard dans tout le volume d'un cône dont le sommet est sensiblement constitué par le sommet du gicleur.

Les différents gicleurs sont disposés de manière que les cônes de pulvérisation d'eau se chevauchent.

Selon un premier mode de réalisation possible, l'enceinte est disposée verticalement et les moyens d'humidification comprennent un premier ensemble de gicleurs orientés vers le bas et disposés à la partie supérieure de l'enceinte de manière à pulvériser de l'eau sur toute la section de l'enceinte située au-dessus de l'extrémité des tubes constituant l'échangeur air-fumées et un second ensemble de gicleurs orientés vers le haut et disposés à la partie inférieure de l'enceinte de manière à pulvériser de l'eau sur toute la section de l'enceinte située au-dessous des tubes.

Il est ici possible d'utiliser une pompe unique pour alimenter en eau le premier ensemble de gicleurs et le second ensemble de gicleurs à partir d'un réservoir d'eau.

Dans le cas d'une enceinte disposée verticalement, de préférence, afin de faciliter la réalisation de la pompe à vapeur, l'air est introduit dans le premier circuit de circulation de fluide gazeux à l'intérieur des tubes et les produits de combustion sont introduits dans le second circuit de circulation de fluide gazeux à l'intérieur de l'enceinte, mais à l'extérieur des tubes.

Selon un autre mode de réalisation de l'invention, l'enceinte est disposée horizontalement et les moyens d'humidification comprennent un ensemble de gicleurs orientés vers le bas et disposés à la partie supérieure de l'enceinte horizontale en étant répartis sur toute la longueur de l'enceinte entre les orifices d'entrée et de sortie d'air.

Dans le cas d'une enceinte disposée horizontalement, les produits de combustion sont introduits dans le premier circuit de circulation de fluide gazeux à l'intérieur des tubes et l'air est introduit dans le second circuit de circulation de fluide gazeux à l'intérieur de l'enceinte, mais à l'extérieur des tubes.

La pompe à vapeur selon l'invention est avantageusement utilisée en combinaison avec un processus thermique déjà associé à un condenseur traditionnel et peut constituer ainsi un surcondenseur dans lequel les moyens d'humidification d'air sont alimentés en eau à partir d'un réservoir contenant les condensats issus d'un premier condenseur.

La pompe à vapeur selon l'invention peut être également avantageusement utilisée en combinaison avec un processus ou générateur thermique à contact direct du type laveur scrubber ou combustion submergée, les moyens d'humidification d'air pouvant être alimentés en eau depuis le bloc de récupération de condensat du générateur.

Selon une caractéristique particulière, la pompe à vapeur comprend en outre un clapet d'air disposé dans un conduit de sortie relié à l'orifice de sortie d'air comburant humide pour empêcher un entraînement d'eau par capillarité vers l'organe de combustion associé audit process thermique.

La pompe à vapeur selon l'invention peut comprendre plusieurs étages montés en cascade et comprenant chacun une enceinte commune avec un échangeur tubulaire air-produits de combustion à contre-courant sans fluide intermédiaire.

Toutefois, selon un mode particulier de réalisation, dans le cas d'une pompe à vapeur à enceinte verticale, la pompe à vapeur peut comprendre plusieurs échangeurs tubulaires air-produit de combustion à contre-courant sans fluide intermédiaire disposés à l'intérieur de ladite enceinte commune dans des compartiments séparés par des parois verticales munies d'une première ouverture à l'une de leurs extrémités pour le passage de l'air entre deux compartiments adjacents, et d'une seconde ouverture réalisée au voisinage de l'autre extrémité de l'enceinte pour le passage du flux de produits de combustion dans une paroi verticale de séparation entre compartiments, en maintenant des circuits de circulation distincts à contre-courant pour l'air et les produits de combustion.

Selon un aspect particulier de l'invention, la pompe à vapeur peut comprendre en outre un turbo-compresseur comprenant un compresseur situé sur une conduite de transport d'air comburant reliée à l'orifice de sortie d'air saturé et réchauffé et une turbine située sur le conduit de sortie des produits de combustion après passage dans la pompe à vapeur de sorte que les produits de combustion sont maintenus sous pression dans la pompe à vapeur tandis que l'air comburant est maintenu à la pression atmosphérique ambiante lors de son passage dans la pompe à vapeur.

Dans ce cas, la pompe à vapeur peut encore comprendre un surchauffeur disposé en amont du compresseur sur ladite conduite de transport d'air comburant.

D'autres caractéristiques et avantages de la présente invention ressortiront de la description suivante de modes particuliers de réalisation, donnés à titre d'exemples en référence aux dessins annexés, sur lesquels :
- la figure 1 est une vue schématique en coupe verticale d'une pompe à vapeur selon un premier mode de réalisation de l'invention dans lequel une enceinte unique est placée verticalement,
- la figure 2 est une vue schématique d'une pompe à vapeur semblable à celle de la figure 1, mais dans laquelle les moyens de pulvérisation d'eau sont alimentés à partir d'une source de fluide unique à l'aide d'une pompe unique,
- la figure 3 est une vue en coupe selon la ligne III-III de la figure 1 montrant la forme de la section des tubes constituant l'échangeur de chaleur placé dans l'enceinte de la pompe à vapeur de la figure 1,
- la figure 4 est une vue en coupe axiale des éléments essentiels d'un exemple de pompe à vapeur selon le mode de réalisation des figures 1 et 2,
- la figure 5 est une vue de la face de sortie d'un gicleur utilisé dans les moyens d'humidification installés dans la pompe à vapeur selon l'invention,
- la figure 6 est une vue schématique montrant la mise en oeuvre de deux enceintes verticales d'échange montées en cascade pour constituer une pompe à vapeur selon l'invention,
- la figure 7 est une vue schématique montrant la mise en oeuvre de deux ensembles verticaux d'échange de chaleur séparés par une cloison verticale et montés en série au sein d'une même enceinte dans une pompe à vapeur selon l'invention,
- la figure 8 est une vue en coupe axiale des éléments essentiels d'un exemple de pompe à vapeur selon l'invention avec une enceinte disposée horizontalement,
- la figure 9 est une vue schématique montrant la mise en oeuvre de deux enceintes horizontales d'échange montées en cascade au sein d'une pompe à vapeur selon l'invention, et
- la figure 10 est une vue schématique montrant la mise en oeuvre d'une pompe à vapeur selon l'invention associée à des moyens de mise en pression.

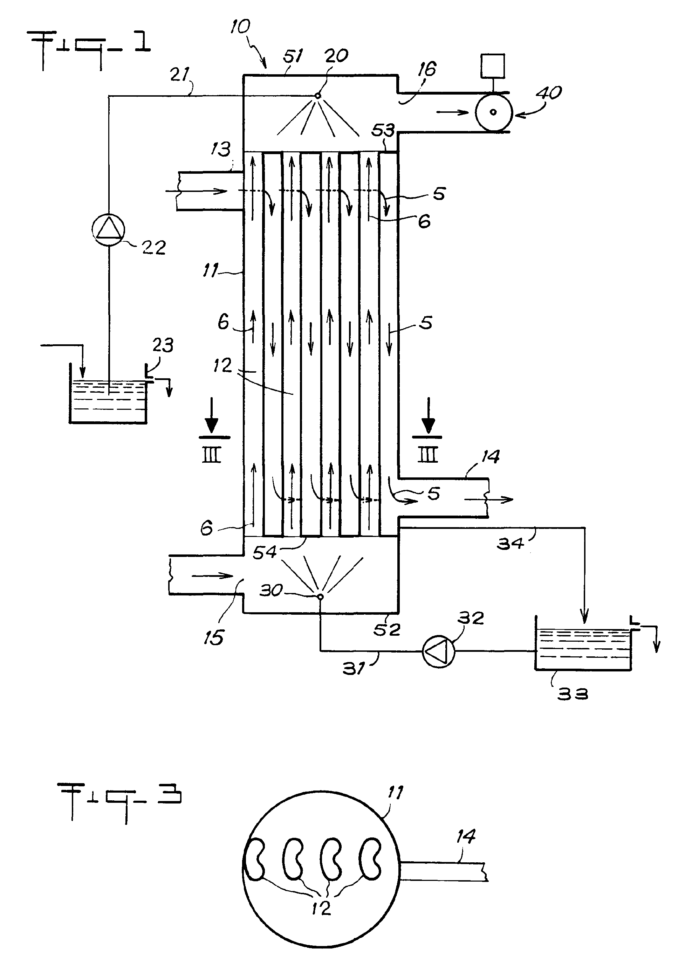

On voit sur la figure 1 un premier exemple de pompe à vapeur, ou échangeur massique et thermique, conforme à l'invention.

Cette pompe à vapeur 10 comprend essentiellement une enceinte verticale 11 commune à l'intérieur de laquelle s'effectuent des échanges de chaleur entre fumées et air comburant. Un ensemble de parois tubulaires verticales 12 sont disposées à l'intérieur de l'enceinte 11 de telle manière que, sur cet exemple, la face externe des parois des tubes 12 est en contact avec les fumées qui ne sont pas humidifiées tandis que la face interne des parois des tubes 12 est en contact avec l'air frais comburant qui circule dans l'enceinte 11 à l'intérieur des tubes 12 et est humidifié par des moyens 20, 30 de pulvérisation d'eau ou de condensats.

Un orifice 15 d'introduction d'air neuf est formé dans l'enceinte 11 au voisinage du fond 52 de celle-ci et sous une cloison inférieure 54 de support des tubes 12 et d'obturation des espaces libres entre les tubes 12 tandis qu'un orifice 16 d'évacuation d'air réchauffé et humidifié est formé dans l'enceinte 11 au voisinage de la partie supérieure 51 de celle-ci et au-dessus d'une cloison supérieure 53 de support de tubes 12 et d'obturation des espaces libres entre les tubes 12.

Une canalisation 13 d'amenée de fumées chaudes, traverse l'enceinte 11 à un niveau situé juste en dessous de l'orifice 16 d'évacuation de l'air réchauffé, et sous la cloison horizontale supérieure 53 tandis qu'une canalisation 14 d'évacuation de fumées froides traverse l'enceinte 14 à un niveau situé juste au dessus de l'orifice 15 d'introduction d'air comburant neuf et au-dessus de la cloison horizontale inférieure 54. Les fumées symbolisées par les flèches 5 circulent ainsi dans le conduit 13 d'amenée des fumées qui est en communication avec les passages compris dans l'enceinte 11 entre les cloisons horizontales 53 et 54 et situés à l'extérieur des tubes 12, puis après avoir circulé de haut en bas entre les cloisons 53 et 54 sortent de la pompe à vapeur 10 par la canalisation de sortie 14.

L'air symbolisé par des flèches 6 circule à contre-courant par rapport aux fumées 5, c'est-à-dire de bas en haut. Dès son introduction dans l'enceinte 11 par l'orifice d'entrée 15, l'air neuf relativement froid et sec est humidifié par un premier dispositif d'humidification 30 disposé à la partie inférieure de l'enceinte 11 sous la cloison 54 et réalisé de manière à pulvériser un fin brouillard dans toute la section d'entrée d'air à l'intérieur des tubes 12 au niveau de la cloison 54, le brouillard étant produit dans le même sens que le flux d'air, c'est-à-dire vers le haut.

Un second dispositif d'humidification 20 est disposé à la partie supérieure de l'enceinte 11 et est réalisé de manière à pulvériser un fin brouillard dans toute la section de sortie d'air constituée par les sections de sortie des tubes 12 traversant la cloison supérieure 53, le fin brouillard étant produit vers le bas, c'est-à-dire à contre-courant par rapport au flux d'air débouchant des tubes 12. Les brouillards produits par les dispositifs d'injection d'eau 20 et 30 contribuent à humidifier l'air comburant et provoquent un ruissellement de l'eau sur la face interne des parois des tubes 12 qui constituent l'échangeur proprement dit. L'air et l'eau pulvérisée dans l'air se réchauffent par contact avec les faces internes des parois des tubes 12, dont les faces externes sont en contact avec les produits de combustion. Il s'ensuit une vaporisation des gouttelettes d'eau, la saturation progressive de l'air de combustion et la condensation dans les produits de combustion.

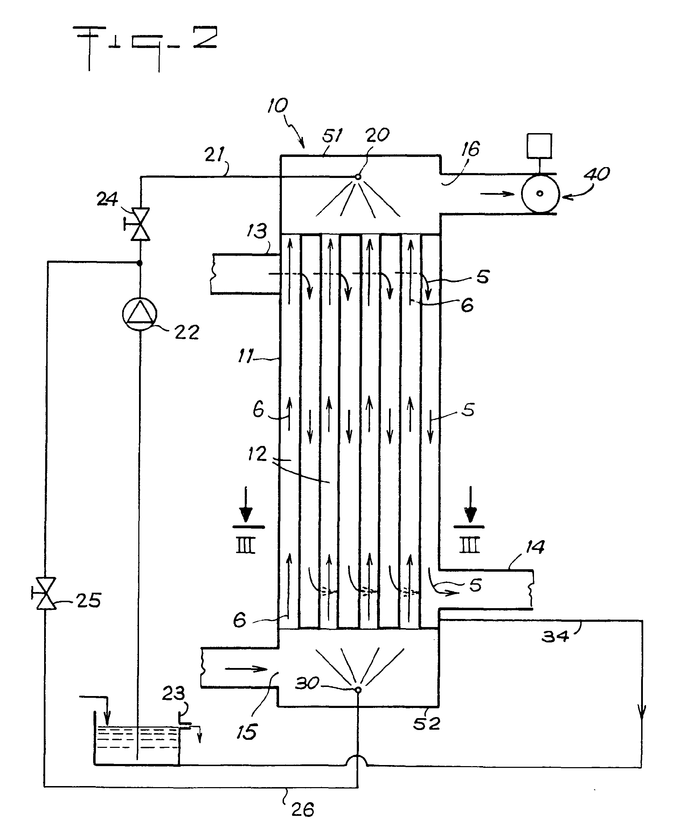

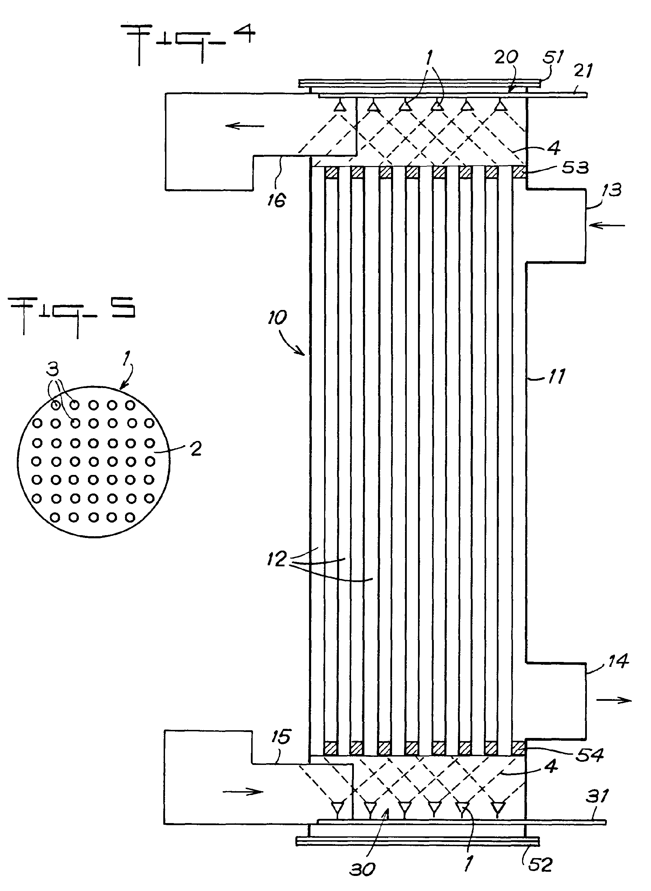

Les tubes 12 présentent avantageusement une section de forme particulière qui améliore l'efficacité de l'échange. Comme cela est représenté sur la figure 3, chaque tube 12 peut ainsi présenter une section en forme de haricot avec deux portions de plus grande section réunies par une portion étroite de liaison au niveau de laquelle est produit un effet venturi qui entretient des turbulences au niveau du flux gazeux circulant à l'intérieur du tube. De plus, la présence d'une gorge sur la face externe des tubes en forme de haricot, c'est-à-dire du côté de la circulation des fumées, permet de casser en permanence le film d'eau formé par les condensats et évite ainsi que ces derniers se comportent comme un film isolant. Le film de condensat peut se briser naturellement du fait qu'une masse importante d'eau s'accumule dans la gorge et peut se décrocher par son propre poids.

Les tubes 12 peuvent être métalliques par exemple en acier inoxydable. Toutefois, du fait que l'échangeur est capable de fonctionner avec des fumées se trouvant à de relativement faibles températures, notamment dans le cas de l'association de la pompe à vapeur avec un générateur à contact direct les tubes 12 peuvent être réalisés en des matières synthétiques telles que le PVC ou le PVDF.

A titre d'exemple, une chaudière de production d'eau chaude ou de vapeur nécessaire à un chauffage ou à un process et équipée d'un brûleur à air soufflé peut être associée à un condenseur dans lequel les eaux en retour d'utilisation ou de l'eau froide d'appoint sont utilisées dans une première phase d'échange pour refroidir les produits de combustion. Le refroidissement provoque la condensation de la vapeur d'eau issue de la combustion lorsque la température d'entrée du fluide à chauffer est en dessous de la température de rosée des produits de combustion. Si le condenseur utilisé permet d'abaisser la température des produits de combustion jusqu'à une température qui est de l'ordre de 45°C, les produits de combustion déjà partiellement refroidis et délestés d'une partie de leur vapeur d'eau introduits dans une pompe à vapeur selon l'invention cèderont une part plus ou moins grande de l'énergie qu'ils contiennent encore sous forme d'énergie recyclée avec l'air comburant préchauffé et humidifié par son passage dans la pompe à vapeur.

Dans la pompe à vapeur selon l'invention qui possède une surface d'échange constituée par les tubes 12 et est équipée de deux têtes 20, 30 de pulvérisation de condensats, on observe que de l'air comburant pris à 10°C avec une humdité relative de 60% est porté à 42°C avec une humidité relative de 95%. Dans le même temps les fumées qui étaient à 45°C en sortie de condenseur seront rejetées saturées à 25°C.

Par ailleurs, outre les économies importantes qu'elle génère, la pompe à vapeur selon l'invention permet une réduction de la formation d'oxyde d'azote souvent très importante (supérieure à 50%). Ce phénomène est dû à l'obtention d'une flamme plus froide en raison du "dopage" en vapeur d'eau de l'air comburant et à la raréfaction concomitante de l'oxygène dans l'air comburant.

Dans la pompe à vapeur selon l'invention, grâce à l'utilisation de tubes 12 dont une face n'est en contact qu'avec les fumées tandis que l'autre face est en contact avec l'air et l'eau pulvérisée, les transferts d'énergie simultanés entre les produits de combustion et l'air comburant sont effectués sous les quatre formes suivantes :
- transfert de l'énergie des fumées vers l'air par voie sèche à travers la paroi des tubes 12,
- transfert de l'énergie des fumées vers l'eau pulvérisée par voie sèche à travers la paroi des tubes 12,
- transfert de l'énergie des condensats de fumées vers l'eau pulvérisée par voie sèche à travers la paroi des tubes 12,
- transfert de l'énergie de l'eau pulvérisée vers l'air par voie directe au sein du circuit de circulation de l'air.

Un aspect important de la présente invention est lié à la pulvérisation d'eau qui n'est effectuée qu'à travers le flux d'air et non à travers le flux de fumées.

Sur la figure 1 on a représenté un réservoir d'eau 23 qui peut être par exemple un collecteur de condensats issus d'un générateur à condensation ou d'un condenseur sur l'eau associé à une chaudière classique, mais pourrait également être un réservoir d'eau provenant d'une source extérieure. D'une façon générale, la pompe à vapeur selon l'invention ne nécessite que l'utilisation d'une relativement faible quantité d'eau qui peut être pompée par une pompe 22 à faible débit pouvant fonctionner avec une faible puissance électrique par exemple de l'ordre de quelques kilowatts. L'eau pompée par la pompe 22 dans le réservoir 23 est appliquée par une conduite 21 à la tête de pulvérisation supérieure 20 qui n'est représentée que de façon schématique sur la figure 1, mais est conçue pour injecter l'eau sous forme de brouillard dans toute la section de l'enceinte 11 qui est située au-dessus de l'échangeur formé des tubes 12 et constitue la section de sortie de l'air réchauffé destiné à être évacué par l'orifice de sortie 16.

La seconde tête 30 de pulvérisation d'eau peut être réalisée d'une façon semblable à celle de la tête supérieure 20 pour injecter l'eau sous forme de brouillard sur toute la section de l'enceinte 11 qui est située au-dessous de l'échangeur formé des tubes 12 et constitue la section d'entrée de l'air neuf introduit par l'orifice d'entrée 15. L'eau peut être appliquée à la tête de pulvérisation inférieure 30 par une canalisation 31 alimentée par une pompe 32 à partir de l'eau contenue dans un réservoir 33. Le réservoir 33 peut recevoir par une ligne 34 des condensats recueillis à la partie inférieure des tubes 12.

La figure 2 montre une variante de réalisation de la figure 1, dans laquelle les têtes de pulvérisation supérieure 20 et inférieure 30, qui constituent les moyens d'humidification de l'air introduit dans l'enceinte 11, sont alimentées à l'aide d'une seule pompe 22 par des lignes 21 et 26 à partir d'un même réservoir 23 qui peut être un collecteur des condensats d'un condenseur comme indiqué plus haut. Des vannes 24, 25 sont disposées sur les canalisations 21 et 26 pour régler le débit d'injection d'eau à travers les têtes de pulvérisation 20 et 30. Dans le cas de la figure 2, qui constitue un mode de réalisation ne nécessitant la mise en oeuvre que d'une seule pompe électrique 22, les condensats formés dans l'échangeur à l'extérieur des tubes 12 peuvent être ramenés par une canalisation 34 vers le réservoir 23.

Sur les figures 1 et 2, on a représenté un clapet d'air qui est disposé dans un conduit de sortie relié à l'orifice 16 de sortie d'air. Le clapet 40 empêche ainsi un entraînement d'eau par capillarité vers le brûleur et évite ainsi que les organes de sécurité associés au brûleur ne procèdent à une mise hors service de celui-ci.

La pompe à vapeur selon l'invention est particulièrement adaptée pour fonctionner en combinaison avec un générateur de chaleur à condensation, comme déjà indiqué plus haut, mais peut être installée sur tout équipement thermique grâce à un organe de reprise ou de ventilation mécanique.

Lorsque la pompe à vapeur est installée en dérivation au conduit de fumées d'un équipement thermique, les débits des flux d'air et de fumées sont équilibrés par la mise en place d'un variateur de vitesse ou d'un système équivalent sur l'organe de reprise.

On notera que la pompe à vapeur associée à un générateur de chaleur à condensation peut constituer un dispositif auto-amorçant ne nécessitant pas d'apport d'eau neuve extérieure au démarrage s'il est prévu un système de récupération et de contrôle de condensats.

Par ailleurs, une pompe à vapeur selon l'invention, du fait qu'elle conduit au rejet de fumées froides et peu humides, permet d'éviter de procéder à un tubage des cheminées qui est toujours coûteux.

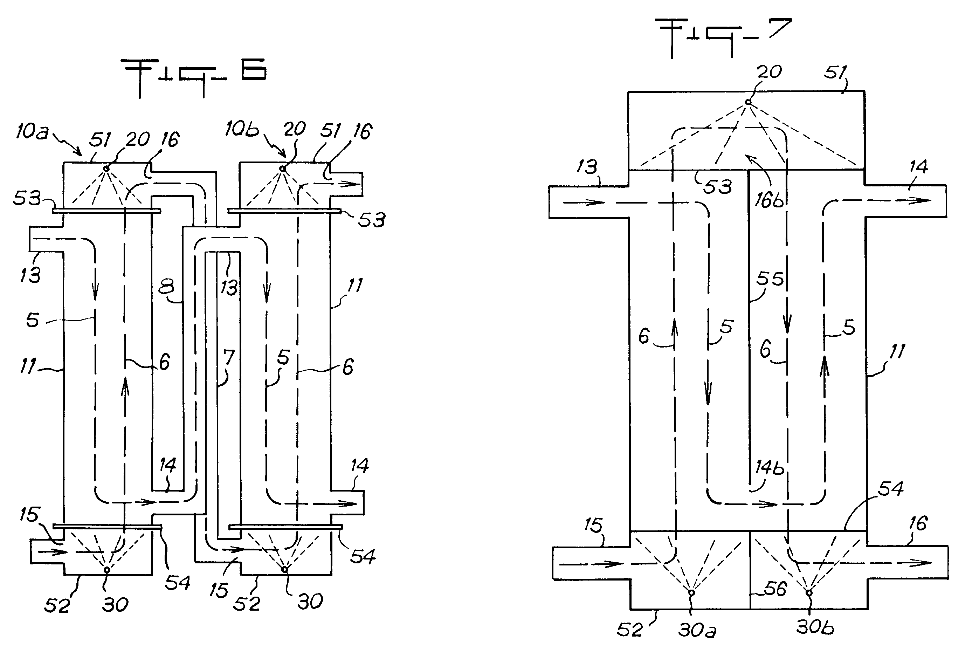

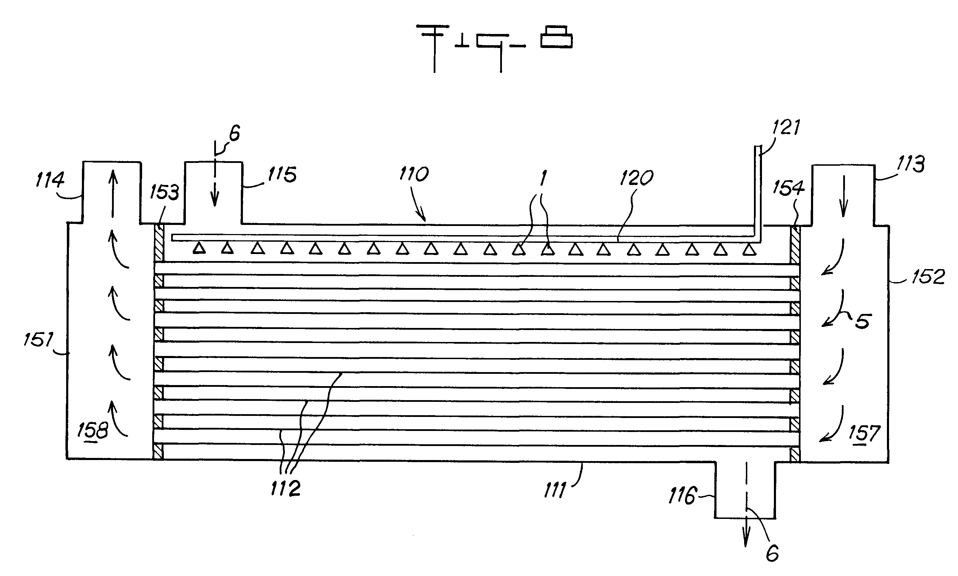

On décrira maintenant de façon plus détaillée en référence aux figures 4 et 5 les moyens de pulvérisation d'eau 20, 30 utilisés dans une pompe à vapeur à enceinte verticale telle que la pompe à vapeur déjà décrite en référence aux figures 1 à 3.

Chaque tête de pulvérisation d'eau 20, 30 comprend une rampe de pulvérisation 21, 31 munie d'une série de gicleurs 1 qui peuvent présenter une forme essentiellement conique et comportent sur leur grande face terminale 2 une série de petits orifices 3 régulièrement répartis sur toute la surface constituant la base du cône. Chaque gicleur 1 assure ainsi la projection, sous la forme d'un fin brouillard, de fines gouttelettes d'eau 4 dans tout le volume intérieur à un cône dont le sommet est situé au niveau du gicleur 1. Ces gicleurs 1 sont disposés de telle manière que les volumes coniques remplis de gouttelettes d'eau 4 se chevauchent. Chaque dispositif 20, 30 assure ainsi la projection d'un brouillard dans tout le volume délimité par la partie de l'enceinte 11 dans laquelle est formé l'orifice d'entrée 15 resp. de sortie 16 d'air et une plaque terminale 53 resp. 54 de support des extrémités des tubes 12 dans lesquels circule l'air comburant.

La mise en oeuvre de moyens de pulvérisation qui, grâce à leur configuration et à la pression appliquée aux gicleurs, permettent de créer un fin brouillard, est essentielle pour éviter que se forme trop rapidement le long de la paroi des tubes 12 un voile d'eau qui constituerait un isolant thermique.

La tête inférieure 30 de pulvérisation d'eau, située au niveau de l'orifice d'entrée d'air 15, est disposée de manière que les gouttelettes d'eau soient projetées vers le haut dans le sens de circulation de l'air. La pulvérisation d'eau réalisée à la partie inférieure de l'échangeur provoque une sursaturation de l'air au pied de l'échangeur et facilite l'amorçage à basse température. La pulvérisation d'eau réalisée à la partie supérieure de l'échangeur au voisinage de la sortie de l'air est elle-même effectuée à contre-courant par rapport au flux de circulation d'air.

Dans tous les cas, les têtes 20, 30 de pulvériation d'eau ne forment un fin brouillard que dans le flux d'air comburant et aucune gouttelette d'eau n'est projetée dans le circuit de circulation des fumées, qui est isolé par les cloisons 53, 54 et les parois des tubes 12.

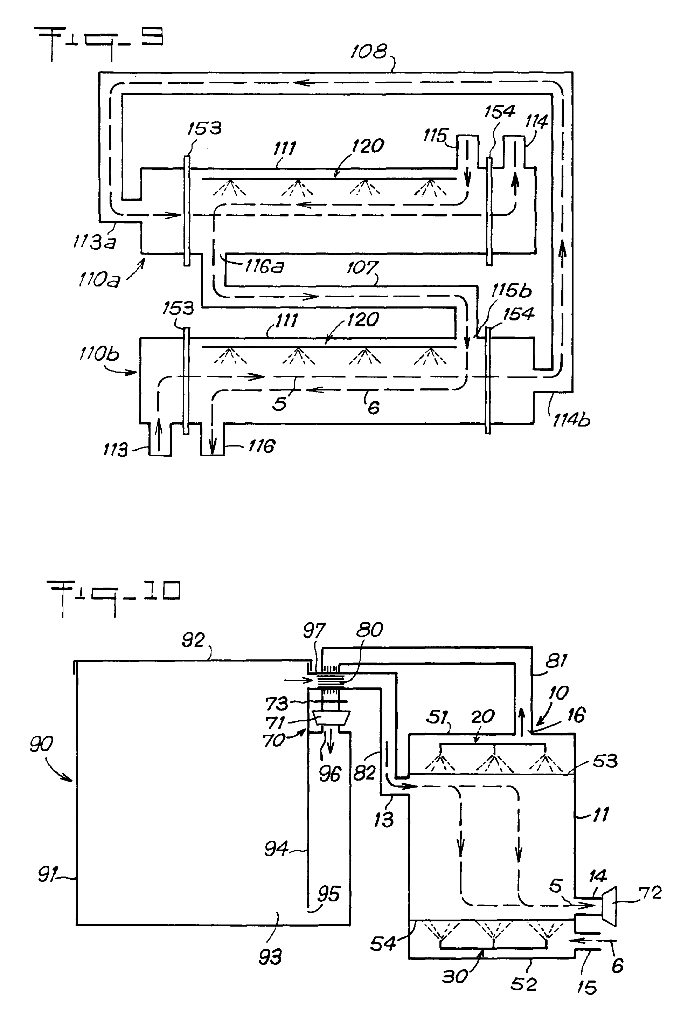

Une pompe à vapeur selon l'invention peut comprendre un seul étage, comme représenté sur les figures 1, 2 et 4, ou plusieurs étages semblables disposés en cascade, comme représenté sur la figure 6.

La figure 6 montre une pompe à vapeur comprenant deux unités 10a, 10b pouvant être chacune identique à la pompe à vapeur de la figure 4 par exemple, avec chacune une enceinte commune 11 à l'intérieur de laquelle sont disposés des ensembles de tubes échangeurs 12, non représentés sur la figure 6, et des moyens de pulvérisation d'eau 20, 30 disposés en haut et en bas de chaque enceinte 11. L'orifice 16 de sortie d'air de la première unité 10a est reliée par une conduite 7 à l'orifice d'entrée d'air 15 de la seconde unité 10b. De même la canalisation 14 de sortie des fumées de la première unité 10a est reliée par une conduite de liaison 8 à la canalisation 13 d'entrée de fumées de la seconde unité 10b. Sur la figure 6, de même que sur les figures 7 et 9, le trajet des fumées est symbolisé par des traits discontinus 5 tandis que le trajet de l'air est symbolisé par des traits discontinus 6. Le fonctionnement de la pompe à vapeur de la figure 6 ne sera pas décrit de façon plus détailée puisque chaque unité 10a, 10b se comporte comme la pompe à vapeur des figures 1, 2 ou 4.

La figure 7 montre un mode de réalisation assez semblable à celui de la figure 6, mais dans lequel plusieurs étages (deux étages dans l'exemple représenté) d'échange sont disposés en série dans la même enceinte 11. Dans ce cas, ces cloisons 55, 56 séparent deux étages consécutifs et des orifices 14b, 16b sont formés dans les cloisons 55, 56 pour constituer des zones de passage de fumées et d'air entre les deux étages successifs. Le sens de circulation des fumées 5 et de l'air 6 sont inversés dans le deuxième étage par rapport au premier étage, de sorte que pour une pompe à vapeur à deux étages intégrés dans une même enceinte 11 comme représenté sur la figure 7, l'orifice 16 d'évacuation d'air se trouve situé au bas de l'enceinte 11 tandis que la canalisation de sortie des fumées 14 est située en haut de l'enceinte 11. La mise en oeuvre d'un troisième étage permettrait de retrouver des orifices de sortie disposés comme selon le mode de réalisation de la figure 4. Compte tenu des sens de circulation du flux d'air 6 adopté dans le mode de réalisation de la figure 7, une rampe unique de pulvérisation d'eau 20 peut être utilisée à la partie supérieure de l'enceinte 11 tandis que deux rampes de pulvérisation d'eau 30a, 30b distinctes sont disposées dans le bas de l'enceinte 11 dans deux compartiments séparés par une cloison 56. Chaque rampe de pulvérisation 20, 30a, 30b peut être réalisée de la façon décrite en référence aux figures 4 et 5.

La figure 8 représente un second mode de réalisation d'une pompe à vapeur 110 selon l'invention, qui se distingue du mode de réalisation de la figure 4 essentiellement par la disposition horizontale de l'enceinte 111 qui présente deux faces d'extrémité latérales 151, 152. Les tubes 112 constituant l'échangeur proprement dit entre l'air et les produits de combustion peuvent être tout à fait analogues aux tubes 12 des figures 1 à 4, mais sont disposés horizontalement entre deux plaques d'extrémité verticales 153, 154 servant de support des tubes 112 par rapport à l'enceinte 111 et de cloisons de séparation entre les circuits d'air et de fumées. Un orifice d'entrée d'air neuf 115 est formé à la partie supérieure de l'enceinte 111, au voisinage la plaque 153 de support de tubes 112, et permet l'alimentation en air frais du volume compris entre l'enceinte 111 et les plaques 153, 154 de support des tubes 112, l'air 6 circulant, de la gauche vers la droite sur la figure 8, autour des tubes 112 dans le sens longitudinal de l'enceinte 111, vers un orifice de sortie d'air 116 situé à la partie inférieure de l'enceinte 111 au voisinage de la plaque 154 de support de tubes. Une canalisation de transport de fumées 113 débouche dans une chambre 157 délimitée par l'extrémité latérale 152 de l'enceinte, la plaque 154 de support de tubes et une partie de l'enceinte 111, pour permettre l'introduction des fumées à l'intérieur des tubes 112 dont une extrémité débouche dans la chambre 157. Chacun des tubes 112 débouche par son extrémité située au niveau de la plaque 153 dans une seconde chambre latérale 158 délimitée par l'extrémité latérale 151 de l'enceinte, la plaque 153 de support des tubes et une partie de l'enceinte 111. Une canalisation 114 d'évacuation des fumées vers l'extérieur est en communication avec la chambre 158. Contrairement au cas du mode de réalisation des figures 1 à 7 à tubes verticaux, dans l'échangeur de la figure 8 défini par les tubes 112, les fumées 5 circulent à l'intérieur des tubes 112 (de la droite vers la gauche sur la figure 8) tandis que l'air comburant circule à l'extérieur des tubes 112 essentiellement à contre-courant (c'est-à-dire de la gauche vers la droite sur la figure 8). On notera que dans une pompe à vapeur à enceinte verticale, telle que celle décrite en référence aux figures 1 à 7, il serait également possible de faire circuler les fumées à l'intérieur des tubes 12 et l'air dans l'espace extérieur aux tubes 12. Dans ce cas, les extrémités des tubes 12 seraient obturées et les cloisons 53, 54 seraient ajourées et les conduites 13, 14 seraient reliées par des tubulures aux extrémités de chacun des tubes 12. Un tel mode de réalisation est toutefois plus complexe à réaliser du fait des tubulures additionnelles nécessaires pour mettre en communication les tubes 12 et les conduits 13, 14.

Des moyens d'humidification 120 constitués par une rampe de pulvérisation d'eau 121 munie d'un ensemble de gicleurs 1, est disposée à l'intérieur de l'enceinte 111, à la partie supérieure de celle-ci et s'étend sur toute la longueur de l'échangeur constitué des tubes 112 c'est-à-dire sur toute la longueur comprise entre les plaques de support 153 et 154. La rampe de pulvérisation 120 est ainsi disposée de manière à permettre la formation d'un fin brouillard non seulement au niveau de la section de l'enceinte voisine de l'orifice d'entrée d'air 115 et au niveau de la section de l'enceinte 111 voisine de l'orifice de sortie d'air 116, mais également sur toute la zone intermédiaire où s'effectuent les échanges de chaleur à travers les parois des tubes 112. La pulvérisation d'eau tout le long de l'échangeur contribue à "casser" les gradients de température et donc à maintenir une température à peu près constante dans toutes les sections de l'enceinte depuis l'entrée d'air 115 jusqu'à la sortie d'air 116 alors que dans une pompe à vapeur à enceinte verticale telle que celle de la figure 4 les échanges entre l'air et les fumées à travers les parois des tubes 12 provoquent une évolution de la température selon les sections de l'enceinte.

En tout état de cause, comme dans le cas d'une pompe à vapeur selon les figures 1 à 4, dans le mode de réalisation de la figure 8, la pulvérisation de l'eau est réalisée à l'aide de gicleurs 1 produisant un jet sous la forme d'un cône plein, qui sont semblables aux gicleurs déjà décrits en référence aux figures 4 et 5, et projettent de fines gouttelettes d'eau dans des volumes coniques qui se chevauchent de façon à créer un fin brouillard dans tout l'espace interne à l'enceinte 111 et externe aux tubes 112 dans lequel circule l'air comburant.

La figure 9 montre la mise en oeuvre en cascade de deux unités 110a, 110b semblables à l'unité de la figure 8 pour constituer une pompe à vapeur à deux étages en série. Dans ce cas, et d'une façon similaire au mode de réalisation de la figure 6, l'orifice 116a de sortie de l'air de la première unité 10a est relié par une conduite 107 à l'orifice 115b d'entrée d'air de la deuxième unité 10b et la canalisation 114b de sortie des fumées de la seconde unité 110b est reliée par une canalisation de liaison 108 à la canalisation 113a d'entrée des fumées de la première unité 110a. Le nombre d'unités horizontales d'échange 110a, 110b montées en série peut naturellement être supérieur à deux.

La figure 10 montre l'application d'une pompe à vapeur 10 selon l'invention non pas à une chaudière à condensation ou similaire, mais à un générateur de chaleur à contact direct.

On voit ainsi sur la figure 10 un générateur de chaleur 90 comprenant une chambre de combustion 94 débouchant par une ouverture 95 dans une enceinte 91 contenant un bain ou une zone 93 permettant le chauffage d'un fluide en procédant par contact direct avec les produits de combustion 94 par un orifice 96 d'entrée d'air. Le fluide combustible, tel que du gaz naturel, est introduit dans la chambre de combustion 94 par un dispositif d'injection classique, qui n'est pas représenté. L'enceinte 91 est fermée à sa partie supérieure par un couvercle 92 qui peut être amovible. Les produits vapeur sortant du bain 93 sont collectés sous le couvercle 92 et évacués par au moins un orifice 97 d'évacuation des fumées hors de l'enceinte 91.

On a représenté sur la figure 10 un bain de liquide 93, tel que de l'eau, qui correspond au cas d'une combustion submergée, mais l'invention s'applique de la même manière au cas d'un process procédant par contact direct entre des produits de combustion et un liquide, tel qu'un dispositif du type laveur-scrubber dans lequel un liquide tel que de l'eau est pulvérisé dans une rampe de pulvérisation disposée dans l'enceinte à un niveau prédéterminé au-dessus du fond de l'enceinte 91, le liquide pulvérisé étant mis en contact direct avec les produits de combustion, et les condensats liquides étant récupérés dans le fond de l'enceinte 91.

Sur la figure 10, on a représenté une pompe à vapeur 10 selon l'invention, qui peut être conforme à l'un quelconque des modes de réalisation précédemment décrits et qui est connectée entre l'orifice 97 d'évacuation des fumées hors de l'enceinte 91 et l'orifice 96 d'entrée d'air comburant dans la chambre de combustion 94. La pompe à vapeur 10 est elle-même munie d'au moins un orifice d'entrée d'air frais 6, d'un orifice 14 de sortie des fumées, d'un orifice 16 de sortie d'air chaud humide connecté par une conduite 81 à l'orifice 96 d'entrée d'air dans la chambre de combustion 94 et d'un orifice 13 d'entrée de fumées saturées connecté par une conduite 82 à l'orifice 97 d'évacuation des fumées hors de l'enceinte 91.

La figure 10 montre par ailleurs qu'il est possible d'adjoindre à la pompe à vapeur 10 des moyens de mise en pression situés du côté des produits de combustion tandis que la pression atmosphérique est maintenue du côté de l'air comburant.

Les moyens de mise en pression peuvent comprendre un compresseur entraîné par un moteur électrique sur l'air circulant dans la conduite 81 reliant l'orifice 16 de sortie d'air de la pompe à vapeur à l'orifice 96 d'entrée d'air comburant dans la chambre de combustion 94. Dans ce cas, il n'existe cependant pas de récupération d'énergie de détente sur les fumées. Aussi, de préférence, les moyens de mise en pression comprennent un petit turbo-compresseur 70 qui permet notamment de récupérer l'énergie de détente au niveau des fumées. Ce turbo-compresseur comprend un compresseur 71 disposé entre la pompe à vapeur 10 et la chambre de combustion 94 en amont de l'orifice 96 d'entrée d'air comburant dans la chambre de combustion 94 et une turbine 72 disposée avantageusement sur le dispositif 14 d'évacuation des fumées 5 en sortie de la pompe à vapeur 10. Un moteur, ou un moto-compresseur 73 de démarrage et d'appoint peut être également mis en oeuvre sur la conduite 81 de transfert de l'air comburant. On notera que le dispositif de compression détente 70 peut être placé au voisinage de la chambre de combustion 94 et de l'enceinte 91 ou au contraire placé sur les conduites 81, 82 au voisinage de la pompe à vapeur 10.

A titre d'option, il est possible d'installer sur la conduite 81 de transfert d'air comburant un surchauffeur 80 qui agit sur l'air humide sortant de la pompe à vapeur avant son entrée dans le compresseur 71. Si l'air est saturé, une surchauffe minimale de 5°C est en général souhaitable. Le surchauffeur 80 peut être constitué par exemple par un échangeur de chaleur réalisant un échange entre les fumées en sortie du bain 93 qui s'échappent par l'orifice 97 de l'enceinte 91 et l'air humide issu de la pompe à vapeur 10 qui est transféré par la conduite 81.

## Revendications

1. Pompe à vapeur d'eau constituée par un échangeur massique et thermique assurant des transferts d'énergie entre d'une part des produits de combustion issus d'un process thermique et ayant traversé un premier condenseur et d'autre part l'air comburant entrant, comprenant une enceinte extérieure (11; 111), un ensemble de compartiments formant échangeur disposés à l'intérieur de l'enceinte (11; 111) dans le sens longitudinal de celle-ci et débouchant à leurs extrémités au niveau d'un premier plan radial et d'un second plan radial (53, 54; 153, 154), de manière à définir entre lesdits plans radiaux un premier circuit de circulation de fluide gazeux à l'intérieur des compartiments et un second circuit distinct de circulation de fluide gazeux à l'intérieur de l'enceinte (11; 111) mais à l'extérieur des compartiments, un orifice (13; 115) d'introduction d'un premier fluide gazeux à l'intérieur de l'enceinte (11; 111) dans ledit second circuit, un orifice (14; 116) d'évacuation hors de l'enceinte dudit premier fluide gazeux circulant dans ledit second circuit, un orifice (15; 113) d'introduction d'un second fluide gazeux à l'intérieur de l'enceinte dans ledit premier circuit et un orifice (16; 114) d'évacuation hors de l'enceinte dudit second fluide gazeux circulant à contre-courant dans ledit premier circuit, l'un des premier et second fluides gazeux étant constitué par lesdits produits de combustion chauds ayant traversé ledit premier condenseur mais encore chargés d'humidité tandis quel'autre fluide gazeux est constitué par de l'air comburant neuf, des moyens (20, 30; 120) d'humidification de l'air introduit dans l'enceinte (11; 111), comprenant un ensemble de gicleurs (1) disposés de manière à pulvériser en volume de l'eau en fin brouillard, de telle manière que seules les faces des parois des compartiments en contact avec l'air soient humidifiées, de telle sorte que les compartiments définissent à l'intérieur de l'enceinte (11; 111) un échangeur air-produits de combustion à contre-courant sans fluide intermédiaire dans lequel les transferts d'énergie des produits de combustion vers l'air neuf, des produits de combustion vers l'eau pulvérisée et des condensats des produits de combustion vers l'eau pulvérisée sont effectués à travers la paroi des compartiments tandis que le transfert de l'énergie de l'eau pulvérisée vers l'air est réalisé par contact direct, et les moyens d'humidification d'air (20, 30; 120) étant alimentés en eau à partir d'un réservoir (23) caractérisé en ce que les compartiments sont constitués par des tubes (12,112) débouchant à leurs extrémités au niveau desdits premier et second plans radiaux (53,54; 153,154) dans lesquels sont disposés des moyens assurant le positionnement et le support des tubes (12; 112) par rapport à l'enceinte (11; 111) ainsi que l'obturation des espaces libres de la section de l'enceinte (11; 111) situés à l'extérieur des tubes (12; 112), en ce que les gicleurs (1) sont disposés de manière à pulvériser en volume de l'eau au moins dans toute la section d'entrée du circuit de circulation de l'air et dans toute la section de sortie du circuit de circulation d'air, et en ce que les moyens d'humidification d'air (20,30) sont alimentés en eau à partir d'un réservoir contenant les condensats issus du premier condenseur.

2. Pompe à vapeur selon la revendication 1, caractérisée en ce que les tubes (12; 112) présentent des parois lisses.

3. Pompe à vapeur selon la revendication 1 ou la revendication 2, caractérisée en ce que les tubes (12; 112) sont constitués par des tubes à grande surface d'échange, tels que des tubes à section en forme de "haricot" présentant deux portions de plus grand diamètre mises en communication à l'aide d'une portion de liaison étroite.

4. Pompe à vapeur selon l'une quelconque des revendications 1 à 3, caractérisée en ce que les tubes (12; 112) de l'échangeur air-produits de combustion sont réalisés en une matière synthétique telle que du polyfluorure de vinylidène ou du polychlorure de vinyle.

5. Pompe à vapeur selon l'une quelconque des revendications 1 à 4, caractérisée en ce que chaque gicleur (1) formant un élément des moyens d'humidification (20, 30; 120) produit un jet sous la forme d'un cône plein et comprend une multiplicité d'orifices de sortie assurant la pulvérisation d'eau selon un fin brouillard dans tout le volume d'un cône (4) dont le sommet est sensiblement constitué par le sommet du gicleur (1).

6. Pompe à vapeur selon la revendication 5, caractérisée en ce que les différents gicleurs (1) sont disposés de manière que les cônes (4) de pulvérisation d'eau se chevauchent.

7. Pompe à vapeur selon l'une quelconque des revendications 1 à 6, caractérisée en ce que l'enceinte (11) est disposée verticalement et en ce que les moyens d'humidification (20, 30) comprennent un premier ensemble (20) de gicleurs (1) orientés vers le bas et disposés à la partie supérieure de l'enceinte (11) de manière à pulvériser de l'eau sur toute la section de l'enceinte située au-dessus de l'extrémité des tubes (12) constituant l'échangeur air-fumées et un second ensemble (30) de gicleurs (1) orientés vers le haut et disposés à la partie inférieure de l'enceinte (11) de manière à pulvériser de l'eau sur toute la section de l'enceinte située au-dessous des tubes (12).

8. Pompe à vapeur selon la revendication 7, caractérisée en ce que l'air est introduit dans le premier circuit de circulation de fluide gazeux à l'intérieur des tubes (12) et les produits de combustion sont introduits dans le second circuit de circulation de fluide gazeux à l'intérieur de l'enceinte, mais à l'extérieur des tubes (12).

9. Pompe à vapeur selon la revendication 7 ou la revendication 8, caractérisée en ce qu'elle comprend une pompe (22) unique pour alimenter en eau le premier ensemble (20) de gicleurs (1) et le second ensemble (30) de gicleurs (1) à partir d'un réservoir d'eau (23).

10. Pompe à vapeur selon l'une quelconque des revendications 1 à 6, caractérisée en ce que l'enceinte (111) est disposée horizontalement et en ce que les moyens d'humidification (120) comprennent un ensemble de gicleurs (1) orientés vers le bas et disposés à la partie supérieure de l'enceinte horizontale (111) en étant répartis sur toute la longueur de l'enceinte (111) entre les orifices (115, 116) d'entrée et de sortie d'air.

11. Pompe à vapeur selon la revendication 10, caractérisée en ce que les produits de combustion sont introduits dans le premier circuit de circulation de fluide gazeux à l'intérieur des tubes (112) et l'air est introduit dans le second circuit de circulation de fluide gazeux à l'intérieur de l'enceinte, mais à l'extérieur des tubes (112).

12. Pompe à vapeur selon l'une quelconque des revendications 1 à 11, caractérisée en ce qu'elle comprend en outre un clapet d'air (40) disposé dans un conduit de sortie relié à l'orifice (16) de sortie d'air comburant humide pour empêcher un entraînement d'eau par capillarité vers l'organe de combustion associé audit process thermique.

13. Pompe à vapeur selon l'une quelconque des revendications 1 à 12, caractérisée en ce qu'elle comprend plusieurs étages montés en cascade et comprenant chacun une enceinte commune (11; 111) avec un échangeur tubulaire air-produits de combustion à contre-courant sans fluide intermédiaire.

14. Pompe à vapeur selon l'une quelconque des revendications 7 à 9, caractérisée en ce qu'elle comprend plusieurs échangeurs tubulaires air-produit de combustion à contre-courant sans fluide intermédiaire disposés à l'intérieur de ladite enceinte commune (11) dans des compartiments séparés par des parois verticales (55) munies d'une première ouverture (16b) à l'une de leurs extrémités pour le passage de l'air entre deux compartiments adjacents, et d'une seconde ouverture (14b) réalisée au voisinage de l'autre extrémité de l'enceinte (11) pour le passage du flux de produits de combustion dans une paroi verticale (55) de séparation entre compartiments, en maintenant des circuits de circulation distincts à contre-courant pour l'air et les produits de combustion.

15. Pompe à vapeur selon l'une quelconque des revendications 1 à 14, caractérisée en ce qu'elle comprend en outre un turbocompresseur (70) comprenant un compresseur (71) situé sur une conduite de transport d'air comburant reliée à l'orifice (10) de sortie d'air saturé et réchauffé et une turbine (72) située sur le conduit (14) de sortie des produits de combustion après passage dans la pompe à vapeur de sorte que les produits de combustion sont maintenus sous pression dans la pompe à vapeur tandis que l'air comburant est maintenu à la pression atmosphérique lors de son passage dans la pompe à vapeur.

16. Pompe à vapeur selon la revendication 15, caractérisée en ce qu'elle comprend en outre un surchauffeur (80) disposé en amont du compresseur (71) sur ladite conduite de transport d'air comburant.

## Patentansprüche

1. Wasserdampfpumpe, bestehend aus einem Massen- und Wärmeaustauscher, der Energietransfers vornimmt zwischen einerseits Verbrennungsprodukten, die von einem Wärmeprozeß stammen und einen ersten Kondensator durchquert haben, und andererseits der eintretenden Verbrennungsluft, umfassend einen Außenbehälter (11; 111), eine Einheit aus Austauscher bildenden Fächern, die im Inneren des Behälters (11; 111) in Längsrichtung desselben angeordnet sind und an ihren Enden in Höhe einer ersten Radialebene und einer zweiten Radialebene (53, 54; 153, 154) münden, in der Weise, daß sie zwischen diesen Radialebenen einen ersten Kreislauf für die Zirkulation gasförmigen Fluids innerhalb der Fächer und einen zweiten, getrennten Kreislauf für die Zirkulation gasförmigen Fluids innerhalb des Behälters (11; 111), aber außerhalb der Fächer, bilden, eine Öffnung (13; 115) zum Zuführen eines ersten gasförmigen Fluids in das Innere des Behälters (11; 111) in den genannten zweiten Kreislauf, eine Öffnung (14; 116) zum Abführen des ersten, in diesem zweiten Kreislauf zirkulierenden, gasförmigen Fluids aus dem Behälter, eine Öffnung (15; 113) zum Zuführen eines zweiten gasförmigen Fluids in das Innere des Behälters in den genannten ersten Kreislauf und eine Öffnung (16; 114) zum Abführen des zweiten, in diesem ersten Kreislauf im Gegenstrom zirkulierenden, gasförmigen Fluids aus dem Behälter, wobei eines dieser beiden gasförmigen Fluide aus den heißen Verbrennungsprodukten besteht, die den ersten Kondensator passiert haben, aber noch mit Feuchtigkeit beladen sind, während das andere gasförmige Fluid aus der neuen Verbrennungsluft besteht, in den Behälter (11; 111) eingeführte Luftbefeuchtungsvorrichtungen (20, 30; 120), umfassend eine Reihe aus Spritzdüsen (1), die so angeordnet sind, daß sie Wasser in einem bestimmten Umfang zu feinem Nebel zerstäuben, so daß nur die Seiten der Fächerwände benetzt werden, die mit der Luft in Verbindung stehen, und zwar so, daß die Fächer im Innern des Behälters (11; 111) einen Gegenstromaustauscher für Luft und Verbrennungsprodukte ohne Zwischenfluid bilden, in dem die Energieübertragungen von den Verbrennungsprodukten auf die neue Luft, den Verbrennungsprodukten auf das zerstäubte Wasser und den Kondensaten der Verbrennungsprodukte auf das zerstäubte Wasser durch die Wand der Fächer hindurch erfolgt, während die Energieübertragung vom zerstäubten Wasser auf die Luft in direktem Kontakt erfolgt, wobei die Luftbefeuchtungsvorrichtungen (20, 30; 120) von einem Vorratsbehälter (23) aus mit Wasser versorgt werden, dadurch gekennzeichnet, daß die Fächer aus Rohren (12, 112) bestehen, die an ihren Enden in Höhe der jeweiligen ersten und zweiten Radialebene (53, 54; 153, 154) münden, auf denen Vorrichtungen vorgesehen sind, welche die Rohre (12; 112) bezüglich dem Behälter (11; 111) halten und positionieren und die außerhalb der Rohre (12; 112) gelegenen freien Zwischenräume des Querschnitts des Behälters (11; 111) verschließen, dadurch, daß, die Spritzdüsen (1) in der Weise angeordnet sind, daß sie zumindest den ganzen Eintrittsquerschnitt des Luftzirkulationskreislaufs und den ganzen Austrittsquerschnitt des Luftzirkulationskreislaufs mit Wasser in einem bestimmten Umfang bestäuben, sowie dadurch, daß die Luftbefeuchtungsvorrichtungen (20, 30) von einem Vorratsbehälter aus, der die aus dem ersten Kondensator stammenden Kondensate enthält, mit Wasser versorgt werden.

2. Dampfpumpe nach Anspruch 1, dadurch gekennzeichnet, daß die Rohre (12; 112) glatte Wände haben.

3. Dampfpumpe nach Anspruch 1 oder 2, dadurch gekennzeichnet, daß die Rohre (12; 112) aus Rohren mit großer Austauschfläche bestehen, wie beispielsweise Rohre mit einem "bohnenförmige" Querschnitt, die zwei Bereiche mit größerem Durchmesser aufweisen, die miteinander durch einen schmaleren Verbindungsbereich verbunden sind.

4. Dampfpumpe nach einem der Ansprüche 1 bis 3, dadurch gekennzeichnet, daß die Rohre (12; 112) des Austauschers für Luft und Verbrennungsprodukte aus synthetischem Material wie Vinyliden-Polyfluorid oder Polyvinylchlorid bestehen.

5. Dampfpumpe nach einem der Ansprüche 1 bis 4, dadurch gekennzeichnet, daß jede Spritzdüse (1), die ein Element der Befeuchtungsvorrichtungen (20, 30; 120) bildet, einen Strahl in Form eines Vollkonus erzeugt und eine Vielzahl von Austrittsöffnungen umfaßt, die sicherstellen, daß das Wasser im ganzen Umfang des Konus (4) als feiner Nebel zerstäubt wird, wobei die Konusspitze im wesentlichen die Spitze der Düse (1) ist.

6. Dampfpumpe nach Anspruch 5, dadurch gekennzeichnet, daß die einzelnen Spritzdüsen (1) so angeordnet sind, daß die Wasserzerstäubungskonusse (4) sich überschneiden.

7. Dampfpumpe nach einem der Ansprüche 1 bis 6, dadurch gekennzeichnet, daß der Behälter (11) vertikal angeordnet ist, und daß die Befeuchtungsvorrichtungen (20, 30) eine erste Reihe (20) mit nach unten weisenden und im oberen Bereich des Behälters (11) angeordneten Spritzdüsen (1) umfassen, in der Weise, daß Wasser über den ganzen Querschnitt des Behälters zerstäubt wird, der über den Enden der Rohre (12) liegt, die den Austauscher für Luft und Rauchgas bilden, sowie eine zweite Reihe (30) mit nach oben weisenden und im unteren Bereich des Behälters (11) angeordneten Spritzdüsen (1), so daß Wasser über den ganzen Querschnitt des Behälters zerstäubt wird, der sich unter den Rohren (12) befindet.

8. Dampfpumpe nach Anspruch 7, dadurch gekennzeichnet, daß die Luft in den ersten Zirkulationskreislauf für gasförmiges Fluid in die Rohre (12) gespeist wird und die Verbrennungsprodukte in den zweiten Zirkulationskreislauf für gasförmiges Fluid in den Behälter, aber außerhalb der Rohre (12), gespeist werden.

9. Dampfpumpe nach Anspruch 7 oder 8, dadurch gekennzeichnet, daß sie eine einzige Pumpe (22) für die Wasserversorgung der ersten Reihe (20) Düsen (1) und der zweiten Reihe (30) Düsen (1) von einem Wasservorratsbehälter (23) aus umfaßt.

10. Dampfpumpe nach einem der Ansprüche 1 bis 6, dadurch gekennzeichnet, daß der Behälter (111) horizontal angeordnet ist, und daß die Befeuchtungsvorrichtungen (120) eine Reihe von nach unten weisenden und im oberen Bereich des horizontal angeordneten Behälters (111) angeordneten Spritzdüsen (1) umfassen, die über die ganze Länge des Behälters (111) zwischen Eintritts- und Austrittsöffnung (115, 116) verteilt sind.

11. Dampfpumpe nach Anspruch 10, dadurch gekennzeichnet, daß die Verbrennungsprodukte in den ersten Zirkulationskreislauf für gasförmiges Fluid in den Rohren (112) gebracht werden und die Luft in den zweiten Zirkulationskreislauf für gasförmiges Fluid innerhalb des Behälters, jedoch außerhalb der Rohre (112), gespeist wird.

12. Dampfpumpe nach einem der Ansprüche 1 bis 11, dadurch gekennzeichnet, daß sie außerdem eine Luftklappe (40) umfaßt, die in einer mit der Austrittsöffnung für feuchte Verbrennungsluft (16) verbundenen Austrittsleitung angeordnet ist, um eine Wassermitnahme durch Kapillarwirkung zu der mit dem besagten Wärmeprozeß zusammenhängenden Verbrennungsvorrichtung hin zu verhindern.

13. Dampfpumpe nach einem der Ansprüche 1 bis 12, dadurch gekennzeichnet, daß sie mehrere, in Kaskaden montierte Stufen aufweist, die jeweils einen gemeinsamen Behälter (11; 111) mit einem röhrenförmigen Gegenstromaustauscher für Luft und Verbrennungsprodukte ohne Zwischenfluid aufweisen.

14. Dampfpumpe nach einem der Ansprüche 7 bis 9, dadurch gekennzeichnet, daß sie mehrere röhrenförmige Gegenstromaustauscher für Luft und Verbrennungsprodukte ohne Zwischenfluid umfassen, die in dem besagten, gemeinsamen Behälter (11) in Fächern angeordnet sind, die durch senkrechte Wände (55) voneinander getrennt sind und an einem ihrer Enden eine erste Öffnung (16b) für den Luftdurchtritt zwischen zwei aneinandergrenzenden Fächern aufweisen und über eine zweite Öffnung (14b) verfügen, die nahe dem anderen Ende des Behälters (11) für den Durchtritt des Verbrennungsproduktstroms in einer vertikalen Trennwand (55) zwischen Fächern vorgesehen ist, wobei getrennte, gegenströmige Zirkulationskreisläufe für die Luft und die Verbrennungsprodukte bestehen bleiben.

15. Dampfpumpe nach einem der Ansprüche 1 bis 14, dadurch gekennzeichnet, daß sie außerdem einen Turbokompressor (70) mit einem Kompressor (71) umfaßt, der auf eine Verbrennungsluftleitung montiert ist, die mit der Austrittsöffnung (10) für gesättigte und heiße Luft verbunden ist, und einer Turbine (72), die an der Austrittsleitung (14) für die Verbrennungsprodukte vorgesehen ist, nachdem diese durch die Dampfpumpe gegangen sind, in der Weise, daß die Verbrennungsprodukte in der Dampfpumpe unter Druck gehalten werden, während die Verbrennungsluft bei ihrem Durchqueren der Dampfpumpe auf atmosphärischem Druck gehalten wird.

16. Dampfpumpe nach Anspruch 15, dadurch gekennzeichnet, daß sie außerdem dem Kompressor (71) auf der besagten Verbrennungsluftleitung vorgeschaltet einen Überhitzer (80) umfaßt.

## Claims

1. Vapor pump constituted by a mass and heat exchanger providing energy and mass transfers between on the one hand combustion products from a thermal process which have gone through a first condenser and on the other hand the inlet combustion air, comprising an outer enclosure (11; 111) a set of tubes constituting an exchanger disposed lengthwise inside the enclosure (11; 111) and opening out at their ends in first and second radial planes (53, 54; 153, 154) thereby defining between said radial planes a first gaseous fluid flow circuit inside the tubes and a distinct second gaseous fluid flow circuit inside the enclosure (11; 111) but outside the tubes, an inlet orifice (13; 115) for admitting a first gaseous fluid into the enclosure (11; 111) in said second circuit, an outlet orifice (14; 116) for exhausting from the enclosure said first gaseous fluid flowing in said second circuit, an inlet orifice (15; 113) for admitting a second gaseous fluid into the enclosure into said first circuit, and an outlet (16; 114) orifice for exhausting from said enclosure evacuating said second gaseous fluid flowing as a counterflow in said first circuit, one of said first and second gaseous fluids being constituted by said hot moist combustion products which have gone through said first condenser but are still filled with moisture while the other gaseous fluid is constituted by new combustion air, humidifier means (20, 30; 120) for moistening the air admitted into the enclosure (11; 111), which comprise a set of nozzles (1) disposed so as to spray a volume of a fine mist of water in such a way that only those faces of the walls of the tubes that are in contact with the air are moistened, so that the tubes define a counterflow exchanger between the air and the combustion products inside the enclosure (11; 111) without using an intermediate fluid and in which energy is transferred from the combustion products to the new air, from the combustion products to the sprayed water, and from the condensates of the combustion products to the sprayed water are effected via the walls of the tubes while the transfer of energy from the sprayed water is achieved by direct contact, and the humidifier means for moistening the air (20, 30; 120) being supplied with water from a tank (23), characterized in that the compartments are constituted by tubes (12, 112) issuing at their ends at the level of said first and second radial planes (53, 54; 153, 154) in which means are provided to ensure the positioning and support of the tubes (12; 112) with respect to the enclosure (11; 111) as well as the obturation of the free spaces of the cross-section of the enclosure 11; 111) situated outside the tubes (12; 112), in that the nozzles are so placed as to be able to spray volumes of water at least throughout the inlet cross-section of the air-flowing circuit and through the whole outlet section of the air circulation circuit, and in that the air moistening means are fed with water from a tank containing the condensates produced by the first condenser.

2. Vapor pump according to claim 1, characterized in that the tubes (12 ; 112) have smooth walls.

3. Vapor pump according to claim 1 or claim 2, characterized in that the tubes (12; 112) are constituted by tubes having a large heat exchange area, such as tubes of kidney-shaped cross-section, having two larger diameter portions put into communication via a narrow connecting portion.

4. Vapor pump according to any one of claims 1 to 3, characterized in that the tubes (12; 112)of the heat exchanger for exchanging heat between the combustion products and the air are made of a synthetic material such as polyvinylidene fluoride or polyvinyl chloride.

5. Vapor pump according to any one of claims 1 to 4, characterized in that each nozzle (1) constituting a component of the humidifier means (20, 30; 120) produces a jet in the form of a solid cone and comprises a multiplicity of outlet orifices for spraying water in a fine mist throughout the volume of a cone (4) whose apex is substantially constituted by the apex of the nozzle (1).

6. Vapor pump according to claim 5, characterized in that the various nozzles (1) are disposed so that the water spray cones (4) overlap.

7. Vapor pump according to any one of claims 1 to 6, characterized in that the enclosure (11) is disposed vertically and in that the humidifier means (20, 30) comprise a first set (20) of nozzles (1) directed downwards and disposed in the top portion of the enclosure (11) so as to spray water over the entire section of the enclosure situated above the ends of the tubes (12) constituting the air and flue gas heat exchanger, and a second set (30) of nozzles (1) directed upwards and disposed at the bottom of the enclosure (11) so as to spray water over the entire section of the enclosure situated beneath the tubes (12).

8. Vapor pump according to claim 7, characterized in that the air is inserted into the first gaseous fluid flow circuit inside the tubes (12) and the combustion products are inserted into the second gaseous fluid flow circuit inside the enclosure, but outside the tubes (12).

9. Vapor pump according to claim 7 or claim 8, characterized in that it comprises a single pump (22) for feeding both the first set (20) of nozzles (1) and the second set (30) of nozzles (1) from a single water tank (23).

10. Vapor pump according to any one of claims 1 to 6, characterized in that the enclosure (111) is disposed horizontally, and in that the humidifier means (120) comprise a set of nozzles (1) directed downwards and disposed in the top of the horizontal enclosure (111) being distributed over the entire length of the enclosure (111) between the air inlet and outlet orifices (115, 116).

11. Vapor pump according to claim 10, characterized in that the combustion products are inserted into the first gaseous fluid flow circuit inside the tubes (112) and the air is inserted into the second gaseous fluid flow circuit inside the enclosure, but outside the tubes (112).

12. Vapor pump according to any one of claims 1 to 11, characterized in that it further comprises an air valve (40) disposed in an outlet duct connected to the moist combustion air outlet orifice (16) in order to prevent water being driven by capillarity to the combustion member associated with said thermal process.

13. Vapor pump according to any one of claims 1 to 12, characterized in that it comprises a plurality of stages connected in cascade each comprising a common enclosure (11; 111) with a set of counterflow tubes for heat exchange between the air and the combustion products without using an intermediate fluid.

14. Vapor pump according to any one of claims 7 to 9, characterized in that it comprises a plurality of sets of counterflow tubes for heat exchange between the air and the combustion products without using an intermediate fluid and disposed inside said common enclosure (11) in compartments separated by vertical walls (55) provided with first openings (16b) at one of their ends for passing air between pairs of adjacent compartments, and with a second opening (14b) disposed in the vicinity of the other end of the enclosure (11) for passing the flow of combustion products through one of the vertical separation walls (55) between the compartments, while maintaining distinct counterlow circuits for the air and the combustion products.

15. Vapor pump according to any one of claims 1 to 14, characterized in that it comprises a turbo compressor (70) comprising a compressor (71) situated on a duct for transporting combustion air and connected to the outlet orifice (10) for saturated and superheated air, and a turbine (72) situated on the outlet duct (14) for the combustion products after they have passed through the vapor pump so that the combustion products are kept under pressure inside the vapor pump while the combustion air is maintained at atmospheric pressure while it is flowing through the vapor pump.

16. Vapor pump according to claim 15, characterized in that it further includes a superheater (80) disposed upstream from the compressor (71) on said duct for transporting combustion air.
